# EUROPEAN PATENT APPLICATION

(11) **EP 4 749 756 A1**
(43) Date of publication of application: **27.05.2026**
(21) Application number: 25164002.5
(22) Date of filing: 16.03.2025
(51) Int. Cl.: H01M 10/42, H01M 50/152, H01M 50/528, H01M 50/533, H01M 50/574, H01M 50/593, H01M 10/052

(54) **RECHARGEABLE LITHIUM BATTERY DEVICE**

(30) Priority: 26.11.2024 CN 202422896096 U
(71) Applicant: Sysmax Innovations Co., Ltd., Guangzhou, Guangdong 510623 (CN)
(72) Inventor: LI, Wenjie, Guangzhou, Guangdong, 510520 (CN)
(74) Representative: KIPA AB

(57) **Abstract**

A rechargeable lithium battery device are provided, relating to the technical field of lithium battery devices. The rechargeable lithium battery device includes a battery core, a circuit board, a positive electrode conductive sheet, a negative electrode conductive sheet, and an insulating bracket. A conductive shell is electrically connected to the negative electrode of battery core, and the conductive shell is insulated from the positive electrode of battery core. The circuit board is respectively connected to the positive electrode of battery core and the conductive shell through the positive electrode conductive sheet and the negative electrode conductive sheet, thereby forming a complete charging loop of the circuit board and the battery core. The positive electrode conductive sheet and the negative electrode conductive sheet are simple in structure, easy to assemble, and can be connected by touching, thus reducing the risk of short circuit.

## Description

### FIELD

The present disclosure relates to the technical field of lithium battery devices, in particular to a rechargeable lithium battery device.

### BACKGROUND

A working principle of lithium-ion battery (referred to as "lithium battery" for short) is a process of charging and discharging based on a reciprocating movement of electric ions between positive and negative electrodes. At present, the lithium battery devices in the prior art are mainly disposable battery devices. Although the lithium battery devices in the prior art are easy to manufacture, they have less energy storage and need to be replaced frequently, which is not environmentally friendly.

However, in the existing rechargeable battery device, a top and a bottom of the battery core are positive electrode of battery core and negative electrode of battery core respectively, and the circuit board is located above the positive electrode of battery core and far away from the negative electrode of battery core, so it is necessary to introduce two nickel strips to connect the positive electrode of battery core and negative electrode of battery core respectively, which makes the overall structure complicated, and is not conducive to manufacturing and assembly, and the structural stability is not good, and the nickel belts are prone to short circuit caused by poor contact under vibration and high temperature. At the same time, the adoption of nickel strips connection requires high welding requirements for circuit boards, which is prone to short circuit problems caused by improper welding.

Therefore, the existing lithium battery devices have problems of complex structure, unfavorable manufacturing and assembly, and easy short circuit.

### SUMMARY

In view of the shortcomings of the prior art, the purpose of the present disclosure is to provide a rechargeable lithium battery device, aiming to solve the problems of complex structure, unfavorable manufacturing and assembly, and easy short circuit in the existing lithium battery devices.

The present disclosure adopts the following schemes to solve the problems. The present disclosure provides a rechargeable lithium battery device, including: a battery core, where the battery core includes a conductive shell, a positive electrode of battery core and a negative electrode of battery core, where the conductive shell is electrically connected to the negative electrode of battery core, and the conductive shell is insulated from the positive electrode of battery core; a circuit board arranged at an upper end of the positive electrode of battery core; a positive electrode conductive sheet connected to the positive electrode of battery core and the circuit board; a negative electrode conductive sheet connected to the conductive shell and the circuit board; an insulating bracket arranged between the positive electrode of battery core and the circuit board, where the insulating bracket is configured to fix the circuit board, and the insulating bracket is arranged between the positive electrode conductive sheet and the negative electrode conductive sheet.

The positive electrode conductive sheet includes a first horizontal section, a first vertical section, and a second horizontal section which are sequentially connected, where the first horizontal section is located between the positive electrode of battery core and the insulating bracket, and the second horizontal section is attached and connected to the circuit board.

The insulating bracket is arranged with a connecting through hole corresponding to the first horizontal section, and the first horizontal section passes through the connecting through hole and is attached and connected to the positive electrode of battery core.

The negative electrode conductive sheet includes a second vertical section, a connecting section, and a third vertical section which are sequentially connected, where the second vertical section is attached and connected to the conductive shell and the third vertical section is attached and connected to the circuit board.

The insulating bracket is arranged with a connecting groove corresponding to the third vertical section, and the third vertical section passes through the connecting groove and is attached and connected to the circuit board.

The circuit board includes a mainboard, a switch button and a positive electrode protrusion; the switch button is located between the mainboard and the insulating bracket, and the insulating bracket is arranged with an opening corresponding to the switch button; the positive electrode protrusion is arranged above the mainboard, and the positive electrode conductive sheet is connected to the positive electrode protrusion through the mainboard.

The rechargeable lithium battery device further includes a device shell which is sleeved outside the battery core; the device shell is arranged with a through hole corresponding to the opening.

The rechargeable lithium battery device further includes an upper cover, where the upper cover is located above the circuit board, and the upper cover is arranged with a through hole corresponding to the positive electrode protrusion.

The upper cover is arranged with a first protrusion, and the insulating bracket is arranged with a first groove corresponding to the first protrusion.

The rechargeable lithium battery device further includes an insulating ring, where the insulating ring is arranged between the positive electrode of battery core and the insulating bracket; the positive electrode conductive sheet is located at an inner side of the insulating ring; and the negative electrode conductive sheet is located at an outer side of the insulating ring.

Compared with the technologies in the prior art, the present disclosure provides a rechargeable lithium battery device, which includes a battery core, a circuit board, a positive electrode conductive sheet, a negative electrode conductive sheet, and an insulating bracket. A conductive shell is electrically connected to the negative electrode of battery core, and the conductive shell is insulated from the positive electrode of battery core. The circuit board is respectively connected to the positive electrode of battery core and the conductive shell through the positive electrode conductive sheet and the negative electrode conductive sheet, thereby forming a complete charging loop of the circuit board and the battery core. The positive electrode conductive sheet and the negative electrode conductive sheet are simple in structure, easy to assemble, and can be connected by touching, thus reducing the risk of short circuit. And the insulating bracket is also arranged, so that the position of the circuit board is fixed, and at the same time, the contact between the positive electrode conductive sheet and the negative electrode conductive sheet is prevented, so that the stability of the device is improved, and the short circuit risk is further reduced.

### BRIEF DESCRIPTION OF THE DRAWINGS

Fig. 1 is an exploded view of a rechargeable lithium battery device provided in the present disclosure.
Fig. 2 is a schematic diagram of the rechargeable lithium battery device provided in the present disclosure.
Fig. 3 is a front view and an A-A sectional view of the rechargeable lithium battery device provided in the present disclosure.
Fig. 4 is a side view and a B-B sectional view of the rechargeable lithium battery device provided in the present disclosure.
Fig. 5 is a schematic diagram of a battery core of the rechargeable lithium battery device provided in the present disclosure.
Fig. 6 is a schematic diagram of a positive electrode conductive sheet of the rechargeable lithium battery device provided in the present disclosure.
Fig. 7 is a schematic diagram of a negative electrode conductive sheet of the rechargeable lithium battery device provided in the present disclosure.
Fig. 8 is a schematic diagram of a circuit board of the rechargeable lithium battery device provided in the present disclosure.
Fig. 9 is a schematic diagram of an upper cover and an insulating bracket of the rechargeable lithium battery device provided in the present disclosure.

Attached drawing marks:
1-battery core; 11-positive electrode of battery core; 12-conductive shell; 13-negative electrode of battery core; 2-insulating bracket; 21-connecting through hole; 22-first groove; 23-opening; 24-connecting groove; 25-second groove; 3-circuit board; 31-switch button; 32-mainboard; 33-positive electrode protrusion; 34-first chip; 35-second chip; 4-upper cover; 41-first protrusion; 42-second protrusion; 43-second through hole; 5-insulating ring; 6-positive electrode conductive sheet; 61-first horizontal section; 62-first vertical section; 63-second horizontal section; 64-second bending section; 65-first bending section; 7-negative electrode conductive sheet; 71-second vertical section; 72-third vertical section; 73-connecting section; 74-fourth bending section; 75-third bending section; 8-device shell; 81-first through hole.

### DETAILED DESCRIPTION OF EMBODIMENTS

Hereinafter, embodiments of the present disclosure are described in detail, examples of the embodiments are illustrated in the attached drawings, where the same or similar attached drawing marks indicate the same or similar elements or elements having the same or similar functions throughout. The embodiments described below as shown in the drawings are exemplary and are only used to explain the present disclosure, and cannot be understood as limitations of the present disclosure.

In the description of the present disclosure, it should be understood that the orientation or position relationship indicated by the terms "center", "longitudinal", "transverse", "upper", "lower", "front", "rear", "left", "right", "vertical", "horizontal", "top", "bottom", "inner", "outer", etc. is based on the orientation or position relationship shown in the attached drawings, which is only for the convenience of describing the present disclosure and simplifying the description, and is not indicated or implied that the devices or elements referred to must have a specific orientation, be constructed and operate in a specific orientation, and therefore should not be construed as limitations of the present disclosure. In addition, the terms "first", "second", etc. are only for description, can not be understood as indicating or implying relative importance or implicitly indicating the quantity of indicated technical features. Therefore, the features defined as "first" and "second" may include one or more of these features explicitly or implicitly. In the description of the present disclosure, unless otherwise specified, "plurality" means two or more.

In the description of the present disclosure, it should be noted that unless otherwise specified and limited, the terms "installation", "connection" and "configuration" should be broadly understood, for example, they can be fixed connection, detachable connection or integrated connection. It can be directly connected or indirectly connected through an intermediary. For those skilled in the art, the specific meanings of the above terms in the present disclosure can be understood in specific circumstances.

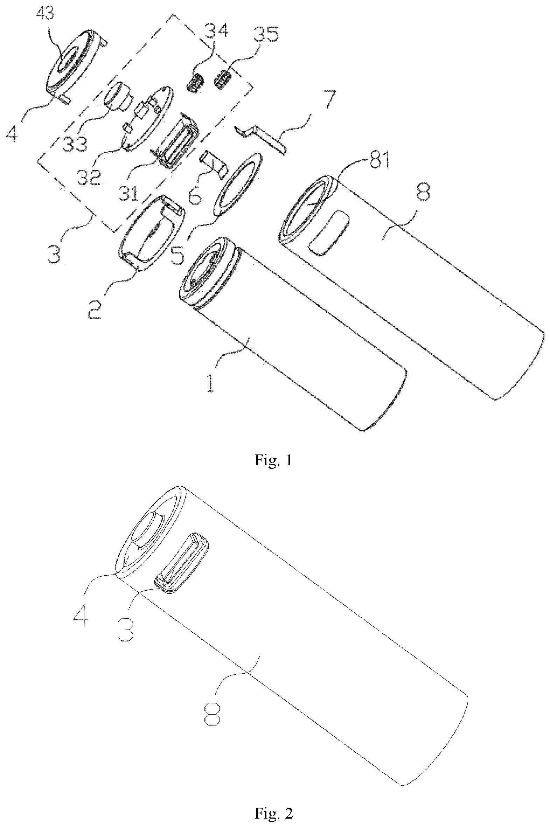

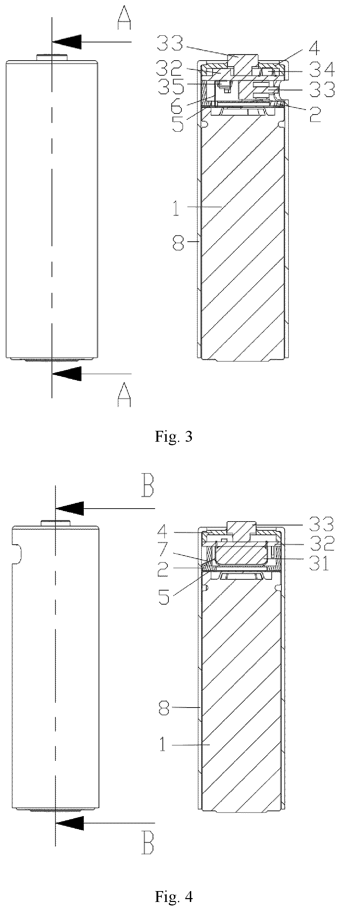

As shown in Fig. 1, Fig. 2, Fig. 3, and Fig. 4, a rechargeable lithium battery device is provided in a first embodiment of the present disclosure, including: a battery core 1, where the battery core 1 includes a conductive shell 12, a positive electrode of battery core 11, and a negative electrode of battery core 13; the conductive shell 12 is electrically connected to the negative electrode of battery core 13 and the conductive shell 12 is insulated from the positive electrode of battery core 11; a circuit board 3 arranged above the positive electrode of battery core 11; a positive electrode conductive sheet 6 connected to the positive electrode of battery core 11 and the circuit board 3; a negative electrode conductive sheet 7 connected to the conductive shell 12 and the circuit board 3; an insulating bracket 2 arranged between the positive electrode of battery core 11 and the circuit board 3, and the insulating bracket 2 is used for fixing the circuit board 3; and the insulating bracket 2 is located between the positive electrode conductive sheet 6 and the negative electrode conductive sheet 7.

An internal structure of the battery core 1 of the existing lithium battery is usually that a negative electrode layer is sleeved outside a positive electrode layer, separated by a diaphragm, and then a protruding part at a top of the battery core is connected to the positive electrode layer as the positive electrode of battery core 11, while a bottom of the battery core is connected to the negative electrode layer as the negative electrode of battery core 13. At the same time, in order to protect the battery core, a battery core shell is sleeved outside the battery core 1.

The battery core 1 of the present disclosure is arranged with a conductive shell 12 which is connected to the negative electrode of battery core 13 of the existing battery core 1, or a non-conductive shell in the existing battery core 1 is replaced with the conductive shell 12. Therefore, a top of the battery core 1 in the present disclosure is the positive electrode of battery core 11, which is a anode area; a bottom of the battery core is a negative electrode of battery core 13 corresponding to the negative electrode layer inside the battery core 1, which is a cathode area. The conductive shell 12 is in contact with the negative electrode of battery core 13, which is also a cathode area. Therefore, the cathode area (the conductive shell 12 and the negative electrode of battery core 13 of the battery) is enlarged, and it is convenient for the circuit board 3 to be connected to the negative electrode of battery core 13 through the conductive shell 12. The conductive shell 12 can be integrally formed with the negative electrode of battery core 13. Specifically, a process of integrally forming the conductive shell 12 and the negative electrode of battery core 13 of the battery core 1 is the existing process.

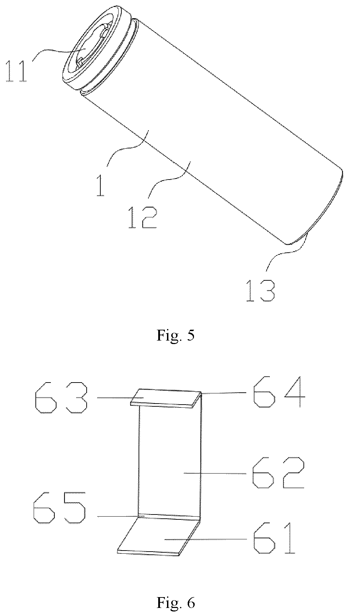

As shown in Fig. 5, the positive electrode of battery core 11 and the conductive shell 12 can be separated by insulating components such as a insulating circle and a insulating rings to prevent the positive electrode of battery core 11 from contacting to the conductive shell 12 for short circuit. The insulating components can be connected to a diaphragm inside the battery core 1, thus completely isolating the positive electrode of battery core 11 from the conductive shell 12. The conductive shell 12 can be a shell made of conductive materials such as a metal shell or an alloy shell, and can be in contact with the negative electrode of battery core 13, thereby being connected and conducted with the circuit board 3. Specifically, the conductive shell 12 can be a steel shell to further improve the structural strength of the device.

The circuit board 3 is located above the positive electrode of battery core 11, so that it is convenient to communicate with the positive electrode of battery core 11 by the positive electrode conductive sheet 6. Longitudinally, the insulating bracket 2 is arranged between the positive electrode of battery core 11 and the circuit board 3, and the insulating bracket 2 can be used for fixing a position of the circuit board 3, thereby improving a stability of the device; transversely, the insulating bracket 2 is located between the positive electrode conductive sheet 6 and the negative electrode conductive sheet 7, which can prevent the positive electrode conductive sheet 6 from contacting with the negative electrode conductive sheet 7 for short circuit. The insulating bracket 2 can be made of common insulating materials, and the materials of the positive electrode conductive sheet 6 and the negative electrode conductive sheet 7 can be made of common conductive materials.

A rechargeable lithium battery device of the present embodiment includes a battery core 1 with a conductive shell 12, a circuit board 3, a positive electrode conductive sheet 6, a negative electrode conductive sheet 7, and an insulating bracket 2. The conductive shell 12 is used as the conductive shell, and a top of the battery core 1 is the positive electrode of battery core 11. The circuit board 3 is respectively connected to the positive electrode of battery core 11 and the conductive shell 12 through the positive electrode conductive sheet 6 and the negative electrode conductive sheet 7, thus forming a complete charging loop of the circuit board 3 and the battery core 1. The positive electrode conductive sheet 6 and the negative electrode conductive sheet 7 are simple in structure, easy to assemble, and can be connected by touching, thus reducing the risk of short circuit. And the insulating bracket 2 is also provided, so that the position of the circuit board 3 is fixed, and at the same time, the contact between the positive electrode conductive sheet 6 and the negative electrode conductive sheet 7 is prevent, so that the stability of the device is improved, and the short circuit risk is further reduced.

As shown in Fig. 6, in some embodiments, the positive electrode conductive sheet 6 includes a first horizontal section 61, a first vertical section 62, and a second horizontal section 63 which are sequentially connected, where the first horizontal section 61 is located between the positive electrode of battery core 11 and the insulating bracket 2, and the second horizontal section 63 is attached and connected to the circuit board 3. The position of the positive electrode conductive sheet 6 can be fixed by the first horizontal section 61 and the second horizontal section 63, thus improving the connection stability of the positive electrode of battery core 11 and the circuit board 3.

The first vertical section 62 is used to connect the first horizontal section 61 and the second horizontal section 63. The first vertical section 62 and the first horizontal section 61 can be connected in an arc transition, or a first bending section 65 is arranged between the first vertical section 62 and the first horizontal section 61, and an angle of the first bending section 65 can be set according to actual needs. Similarly, the first vertical section 62 and the second horizontal section 63 can be connected by arc transition, or by arranging a second bending section 64 between the first vertical section 62 and the second horizontal section 63, and an angle of the second bending section 64 can be set according to actual needs.

Further, the insulating bracket 2 is arranged with a connecting through hole 21 corresponding to the first horizontal section 61, and the first horizontal section 61 passes through the connecting through hole 21 and is attached and connected to the positive electrode of battery core 11. By attaching the first horizontal section 61 to the positive electrode of battery core 11 through the connecting through hole 21, the position of the positive electrode conductive sheet 6 on the insulating bracket 2 can be fixed through the connecting through hole 21, which plays a role of limiting, and further improves the connection stability between the positive electrode of battery core 11 and the circuit board 3.

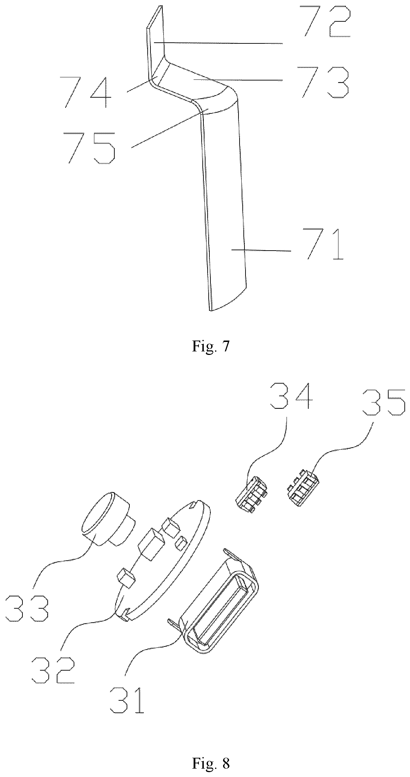

As shown in Fig. 7, in some embodiments, the negative electrode conductive sheet 7 includes a second vertical section 71, a connecting section 73, and a third vertical section 72 which are sequentially connected, where the second vertical section 71 is attached and connected to the conductive shell 12, and the third vertical section 72 is attached and connected to the circuit board 3. The position of the negative electrode conductive sheet 7 can be fixed by the second vertical section 71 and the third vertical section 72, and the connection stability between the conductive shell 12 and the circuit board 3 can be improved. The circuit board 3 has a charging port, and the negative electrode conductive sheet 7 is used to connect the conductive shell 12 and the charging port (or a shell of the charging port) of the circuit board 3. The third vertical section 72 is close to the charging port or the shell of the charging port of the circuit board 3, and the negative electrode conductive sheet 7 is connected to the charging port of the circuit board 3 through the third vertical section 72.

The connecting section 73 is used to connect the second vertical section 71 and the third vertical section 72. The connecting section 73 can be connected to the second vertical section 71 and the third vertical section 72 in an arc transition respectively. Alternatively, the connection can be established by arranging a third bending section 75 between the second vertical section 71 and the connecting section 73 and arranging a fourth bending section 74 between the third vertical section 72 and the connecting section 73, the angles of the third bending section 75 and the fourth bending section 74 can be set according to actual needs.

The negative electrode conductive sheet 7 may further include a third horizontal section, that is, one end of the third vertical section 72 is connected to the connecting section 73, and another end is connected to the third horizontal section, and the position of the negative electrode conductive sheet 7 is further fixed by the third horizontal section being attached to the mainboard 32 of the circuit board 3.

Further, the insulating bracket 2 is arranged with a connecting groove 24 corresponding to the third vertical section 72, and the third vertical section 72 passes through the connecting groove 24 and is attached and connected to the circuit board 3. By attaching the third vertical section 72 to the circuit board 3 through the connecting groove 24, the position of the negative electrode conductive sheet 7 on the insulating bracket 2 can be fixed through the connecting groove 24, which plays a role of limiting, and further improves the connection stability between the conductive shell 12 and the circuit board 3.

Moreover, the connecting through hole 21 and the connecting groove 24 can be arranged at different positions of the insulating bracket 2, so as to separate the positive electrode conductive sheet 6 from the negative electrode conductive sheet 7, and prevent the positive electrode conductive sheet 6 and the negative electrode conductive sheet 7 from short circuit. The insulating bracket 2 includes a bottom surface and a side surface, and the connecting through hole 21 can be arranged on the bottom surface of the insulating bracket 2, and the connecting groove 24 can be arranged on the side surface of the insulating bracket 2.

As shown in Fig. 8, in some embodiments, the circuit board 3 includes a mainboard 32, a switch button 31, and a positive electrode protrusion 33. The switch button 31 is located between the mainboard 32 and the insulating bracket 2, and the insulating bracket 2 is arranged with an opening 23 corresponding to the switch button 31. The positive electrode protrusion 33 is arranged above the mainboard 32, and the positive electrode conductive sheet 6 is connected to the positive electrode protrusion 33 through the mainboard 32. The switch button 31 is used to control the on and off of the circuit board 3. The arrangement of the opening 23 is convenient to expose the switch button 31, thereby controlling the on and off of the switch button 31, and further controlling the opening and closing of the circuit board 3. The protruding arrangement of the positive electrode protrusion 33 is convenient to connect and contact. The circuit board 3 can also be arranged with a plurality of chips such as a first chip 34 and a second chip 35 according to actual needs.

In some embodiments, the rechargeable lithium battery device further includes a device shell 8, and the device shell 8 is sleeved outside the battery core 1. The device shell 8 is arranged with a first through hole 81 corresponding to the opening 23. In the prior art, the common connection structure is that the device shell 8 is directly electrically connected to the anode and cathode of the battery core 1 through the circuit board 3, so when the device shell 8 is accidentally touched, a loop between the battery core 1 and the circuit board 3 is easily affected. However, in the technical schemes of the present disclosure, the device shell 8 is not directly electrically connected to the anode and cathode of the battery core 1, so in the technical schemes of the present disclosure, the device shell 8 does not actually participate in the loop between the battery core 1 and the circuit board 3, so the loop between the battery core 1 and the circuit board 3 can not be affected when the device shell 8 is accidentally touched. And the device shell 8 is a hollow structure, which is used for protecting the battery core 1, and at the same time, it is convenient to expose the anode and the cathode of the device and facilitate to contact and connect. The device shell 8 can enhance the strength of the device and prevent the inside of the device from being damaged by external force. The first through hole 81 of the device shell 8 corresponding to the opening 23 is convenient to correspond to the opening 23 and expose the switch button 31. Meanwhile, the second vertical section 71 is located between the device shell 8 and the insulating bracket 2, and the second vertical section 71 is located between the conductive housing 12 and the device shell 8, so that the position of the second vertical section 71 can be further fixed.

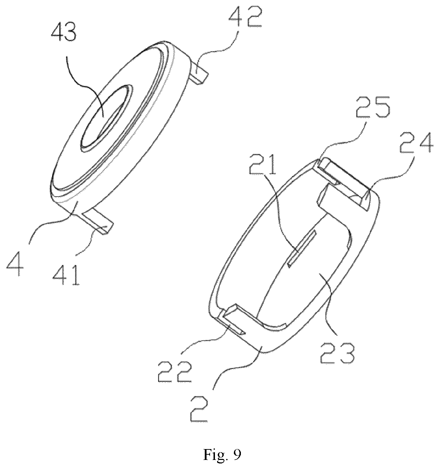

As shown in Fig. 9, in some embodiments, the rechargeable lithium battery device further includes an upper cover 4, which is located above the circuit board 3, and the upper cover 4 is arranged with a second through hole 43 corresponding to the positive electrode protrusion 33, so as to expose the positive electrode protrusion 33 and facilitate contact of the anode. Furthermore, a top of the device shell 8 is located above the upper cover 4 and abuts against the upper cover 4, thereby fixing the position of the upper cover 4.

The device shell 8 sequentially sleeves and covers the upper cover 4, the circuit board 3, the insulating bracket 2, the insulating ring 5, and the battery core 1 from top to bottom. The conductive shell 12 of the battery core 1 is connected to the mainboard 32 of the circuit board 3 through the negative electrode conductive sheet 7. The positive electrode of battery core 11 of the battery core 1 is connected to the mainboard 32 of the circuit board 3 through the positive electrode conductive sheet 6, and further connected to the positive electrode protrusion 33, so that the battery core 1 and the circuit board 3 form a complete closed loop, and the mainboard 32 of the circuit board 3 can be controlled to open and close through the switch button 31, thereby controlling the charging operation of the positive electrode of battery core 11 and the conductive shell 12 of the battery core 1. The device shell 8 can completely cover the conductive shell 12 or partially cover the conductive shell 12.

The rechargeable lithium battery device can be used as a battery to supply power to other devices through the positive electrode protrusion 33 exposed at the top of the device shell 8, the negative electrode of battery core 13 exposed at the bottom of the device shell 8, and/or the partially exposed conductive shell 12.

Further, the upper cover 4 is arranged with a first protrusion 41, and the insulating bracket 2 is arranged with a first groove 22 corresponding to the first protrusion 41. Through a snap-fit arrangement of the first protrusion 41 and the first groove 22, the insulating bracket 2 can be clamping connected to the upper cover 4 , so as to fix the position of the circuit board 3 in the insulating bracket 2 and the upper cover 4 and improve the stability of the device. Meanwhile, in order to further improve the connection stability between the insulating bracket 2 and the upper cover 4, the upper cover 4 can also be arranged with a second protrusion 42, and the insulating bracket 2 is arranged with a second groove 25 corresponding to the second protrusion 42. Correspondingly, the mainboard 32 of the circuit board 3 can also be arranged with through holes corresponding to the first protrusions 41 and the second protrusions 42, so as to fix the position of the mainboard 32 of the circuit board 3 and further fix the positions of the negative electrode conductive sheet 7 and the positive electrode conductive sheet 6 while connecting the insulating bracket 2 with the upper cover 4.

In some embodiments, the rechargeable lithium battery device further includes an insulating ring 5, which is arranged between the positive electrode of battery core 11 and the insulating bracket 2. The positive electrode conductive sheet 6 is located at an inner side of the insulating ring 5, and the negative electrode conductive sheet 7 is located at an outer side the insulating ring 5. The insulating ring 5 can isolate the positive electrode conductive sheet 6 and the negative electrode conductive sheet 7. In addition, the insulating ring 5 can be attached to the battery core 1 and sleeved on a periphery of the positive electrode of battery core 11, so as to isolate the positive electrode of battery core 11 of the battery core 1 and the conductive shell 12, and prevent the positive and negative electrodes from contacting each other and being shortcircuited.

To sum up, the present disclosure provides a rechargeable lithium battery device, which includes a battery core, a circuit board, a positive electrode conductive sheet, a negative electrode conductive sheet, and an insulating bracket. A conductive shell is electrically connected to the negative electrode of battery core, and the conductive shell is insulated from the positive electrode of battery core. The circuit board is respectively connected to the positive electrode of battery core and the conductive shell through the positive electrode conductive sheet and the negative electrode conductive sheet, thereby forming a complete charging loop of the circuit board and the battery core. The positive electrode conductive sheet and the negative electrode conductive sheet are simple in structure, easy to assemble, and can be connected by touching, thus reducing the risk of short circuit. And an insulating bracket is also arranged, so that the position of the circuit board is fixed, and at the same time, the contact between the positive electrode conductive sheet and the negative electrode conductive sheet is prevented, so that the stability of the device is improved, and the short circuit risk is further reduced.

Finally, it should be noted that the above embodiments are only used to illustrate the technical schemes of the present disclosure, but not to limit the present disclosure. Although the present disclosure has been described in detail with reference to the aforementioned embodiments, it should be understood by those skilled in the art that they can still modify the technical schemes recorded in the embodiments or replace some technical features with equivalents. However, these modifications or substitutions do not make the essence of the corresponding technical schemes deviate from the spirit and scope of the technical solutions exemplified in the present disclosure.

## Claims

1. A rechargeable lithium battery device, comprising:
a battery core, the battery core comprises a conductive shell, a positive electrode of battery core and a negative electrode of battery core, wherein the conductive shell is electrically connected to the negative electrode of battery core, and the conductive shell is insulated from the positive electrode of battery core;
a circuit board, arranged at an upper end of the positive electrode of battery core;
a positive electrode conductive sheet, connected to the positive electrode of battery core and the circuit board;
a negative electrode conductive sheet, connected to the conductive shell and the circuit board; and
an insulating bracket, arranged between the positive electrode of battery core and the circuit board, and the insulating bracket is configured to fix the circuit board; and the insulating bracket is arranged between the positive electrode conductive sheet and the negative electrode conductive sheet.

2. The rechargeable lithium battery device according to claim 1, wherein the positive electrode conductive sheet comprises a first horizontal section, a first vertical section, and a second horizontal section which are sequentially connected, wherein the first horizontal section is located between the positive electrode of battery core and the insulating bracket, and the second horizontal section is attached and connected to the circuit board.

3. The rechargeable lithium battery device according to claim 2, wherein the insulating bracket is arranged with a connecting through hole corresponding to the first horizontal section, and the first horizontal section passes through the connecting through hole and is attached and connected to the positive electrode of battery core.

4. The rechargeable lithium battery device according to claim 1, wherein the negative electrode conductive sheet comprises a second vertical section, a connecting section, and a third vertical section which are sequentially connected, wherein the second vertical section is attached and connected to the conductive shell and the third vertical section is attached and connected to the circuit board.

5. The rechargeable lithium battery device according to claim 4, wherein the insulating bracket is arranged with a connecting groove corresponding to the third vertical section, and the third vertical section passes through the connecting groove and is attached and connected to the circuit board.

6. The rechargeable lithium battery device according to claim 1, wherein the circuit board comprises a mainboard, a switch button and a positive electrode protrusion; the switch button is located between the mainboard and the insulating bracket, and the insulating bracket is arranged with an opening corresponding to the switch button; the positive electrode protrusion is arranged above the mainboard, and the positive electrode conductive sheet is connected to the positive electrode protrusion through the mainboard.

7. The rechargeable lithium battery device according to claim 6, wherein the rechargeable lithium battery device further comprises a device shell sleeved outside the battery core; the device shell is arranged with a first through hole corresponding to the opening.

8. The rechargeable lithium battery device according to claim 6, wherein the rechargeable lithium battery device further comprises an upper cover, wherein the upper cover is located above the circuit board, and the upper cover is arranged with a second through hole corresponding to the positive electrode protrusion.

9. The rechargeable lithium battery device according to claim 8, wherein the upper cover is arranged with a first protrusion, and the insulating bracket is arranged with a first groove corresponding to the first protrusion.

10. The rechargeable lithium battery device according to claim 1, wherein the rechargeable lithium battery device further comprises an insulating ring, wherein the insulating ring is arranged between the positive electrode of battery core and the insulating bracket; the positive electrode conductive sheet is located at an inner side of the insulating ring; and the negative electrode conductive sheet is located at an outer side of the insulating ring.
